# EUROPÄISCHE PATENTSCHRIFT

(11) **EP 1 128 990 B1**
(45) Veröffentlichungstag und Bekanntmachung des Hinweises auf die Patenterteilung: **15.01.2003**
(21) Anmeldenummer: 99960823.5
(22) Anmeldetag: 25.10.1999
(51) Int. Cl.: B60R 16/00

(54) **SCHALTER UND/ODER ANZEIGEELEMENT**
SWITCH AND/OR INDICATING ELEMENT
COMMUTATEUR ET/OU INDICATEUR

(30) Priorität: 21.11.1998 DE 19853819
(43) Veröffentlichungstag der Anmeldung: 05.09.2001
(73) Patentinhaber: Delphi Technologies Inc., Troy, MI 48007 (US); DaimlerChrysler AG, 70567 Stuttgart (DE)
(72) Erfinder: BESIER, Holger, D-65375 Oestrich-Winkel (DE); LANGE, Erhard, D-67823 Obermoschel (DE); WEISS, Hans-Günter, D-67550 Worms (DE); LINK, Manfred, D-71334 Waiblingen (DE); KLINK, Siegfried, D-71101 Schönaich (DE)
(74) Vertreter: Becker, Bernd, Dipl.-Ing.
(86) Internationale Anmeldenummer: DE9903426
(87) Internationale Veröffentlichungsnummer: WO00030897

(56) Entgegenhaltungen:
- DE-A- 19 528 693
- DE-A- 19 529 533
- DE-A- 19 739 626
- DE-C- 19 636 643
- US-A- 5 448 028

## Beschreibung

Die Erfindung bezieht sich auf einen Schalter und/oder Anzeigeelement, der bzw. das in ein Lenkrad eines Kraftfahrzeuges eingebaut und dessen in Richtung der Bedienseite weisende Oberfläche mit einer elastischen Kappe überdeckt ist.

Es sind in das Lenkrad eines Kraftfahrzeuges eingebaute Schalter bekannt, deren gehäuseseitig gelagerten Betätigungselemente für den Bediener frei zugänglich und sichtbar angeordnet sind. Um die Verstellbarkeit des Betätigungselementes zu gewährleisten, muß dieses mit ausreichendem Spiel im Gehäuse gelagert sein. Aufgrund des Spiels ist ein sichtbarer Spalt zwischen dem Gehäuse und dem Betätigungselement vorhanden, durch den Schmutz und Feuchtigkeit in den Schalter eindringen kann, wodurch der Schalter in seiner Funktion und in seinem äußeren Erscheinungsbild beeinträchtigt wird. Schmutzablagerungen treten insbesondere an den Kanten von gerasteten Schaltern auf, da das Betätigungselement in der gerasteten Stellung nicht das gleiche Niveau wie in der ungerasteten Stellung aufweist. Eine Verkleinerung des sichtbaren Spaltes durch eine Einengung der Fertigungstoleranzen erhöht die Herstellungs- und Montagekosten. Ferner erweist sich die Integration dieser Schalter in das Lenkrad als optisch störend.

Weiterhin sind Drucktastenschalter bekannt, die mit einer die Drucktaste überdeckenden Schutzkappe versehen sind. Diese Drucktastenschalter werden häufig in landwirtschaftliche Fahrzeuge, Baumaschinen und Fertigungsmaschinen eingebaut. Die elastische Schutzkappe weist einen breiten umlaufenden Rand auf, der über das Schaltergehäuse gestreift und dort mit einer Verschraubung festgesetzt wird. Hierdurch ist einerseits die Dichtheit des Schalters und andererseits der Sitz des Schalters gewährleistet. Diese Anordnung ist insofern nachteilig als bei einem zu festen Andrehen der Verschraubung die Schutzkappe zwischen den Dichtflächen herausgequetscht wird und bei einem zu leichten Andrehen der Verschraubung kein ausreichend fester Schaltersitz vorhanden ist. Zweckbedingt ist die Schutzkappe sehr robust ausgeführt, wodurch das Schaltgefühl beim Betätigen des Drucktastenschalters beeinträchtigt ist. Aufgrund der Robustheit der Schutzkappe wirkt sie optisch grob und ist zur Abdeckung von Anzeigeelementen nicht geeignet.

Aus der DE 197 39 626 A1 (Oberbegriff von Anspruch 1) ist ein an einem Lenkrad angeordneter Schalter bekannt, der in einer Ausnehmung einer Polsterung des Lenkrades angebracht ist. Zur Beaufschlagung eines Schaltelementes ist ein Tastelement in die Ausnehmung eingesetzt. Um ein Verschmutzen der Schalter zu verhindern, weist das Lenkrad einen die Tastelemente und angrenzende Bereiche des Lenkrades sowie der Speichen überdeckenden Überzug auf, der aus einem elastischen Material gefertigt ist.

Im Weiteren offenbart die DE 196 36 643 A1 ein Drehknopfoberteil eines Drehknopfes zur Betätigung eines Bedienteils, insbesondere eines Lüftungs-, Klima oder Heizungsbedienteils in Kraftfahrzeugen. Das Drehknopfoberteil weist ein aus einem harten Material bestehendes Rohteil auf, das aus einer Platte mit randseitig senkrecht dazu angeordneten Stützteilen besteht. Das Rohteil ist mit einem Elastomer überzogen, so dass dabei entstehende Flanken zwischen den Stützteilen einen Freiraum einschließen, wodurch das Griffteil gebildet wird.

Darüber hinaus ist aus der US-A-5 448 028 eine Schalteranordnung bekannt, die zur Ausbildung eines Schaltbereichs ein wippenförmiges Betätigungselement aufweist, das von einem Schaum-Layer und einem elastischen Überzug überdeckt ist, wobei auf den Überzug eine klare Beschichtung aufgetragen ist.

Es ist Aufgabe der Erfindung, einen Schalter und/oder ein Anzeigeelement der eingangs genannten Art zu schaffen, der bzw. das bei niedrigen Herstellkosten relativ einfach zu montieren ist und einen kompakten Aufbau aufweist.

Erfindungsgemäß wird die Aufgabe dadurch gelöst, daß zur Festlegung der Kappe an einem Gehäuse des Schalters und/oder des Anzeigeelementes Hinterschnitte angebracht sind, in die korrespondierende Hintergriffe der Kappe eingreifen, wobei die Hinterschnitte in Seitenwände des Gehäuses eingelassen sind, und die Kappe mit einem sich an die Seitenwände anlegenden elastischen Rand versehen ist, an den die Hintergriffe angeformt sind.

Durch das Eingreifen der Hintergriffe der Kappe in die Hinterschnitte des Gehäuse werden zur Fixierung der Kappe keine zusätzlichen Befestigungselemente benötigt. Im Weiteren weist der Schalter und/oder das Anzeigeelement einen kompakten Aufbau auf, der gleichzeitig formtechnisch relativ einfach zu realisieren ist.

Nach einer vorteilhaften Ausgestaltung der Erfindung ist die Kappenfläche der Kappe an die Oberflächenstruktur des Lenkrades angepaßt und weist an ihren Rändern einen kontinuierlichen Übergang zum Lenkrad auf. Bevorzugt sind die Ränder der Kappenfläche mit einer einen Übergangsbereich zwischen dem Schalter und/oder dem Anzeigeelement sowie dem Lenkrad überdeckenden, umlaufenden Übergangslippe versehen. Hierdurch ergibt sich der Gesamteindruck einer kompakten Einheit. Die Übergangslippe verschließt den kleinen Spalt zwischen der Oberfläche der Kappe sowie dem umliegenden Bereich des Lenkrades bzw. des Pralltopfes, verhindert einerseits eine Schmutzansammlung in diesem Spalt und verstärkt andererseits den Eindruck der einheitlichen Oberfläche.

Nach einer vorteilhaften Weiterbildung des Erfindungsgedankens sind die Seitenwände des Gehäuses im Überdeckungsbereich mit dem Rand der Kappe um die Dicke des Randes verjüngt. Diese Maßnahme stellt bei einem umschlossenen Einbauraum des Schalters und/oder des Anzeigeelementes den korrekten Sitz der Kappe sicher, da sich die Hintergriffe der Kappe nicht aus den Hinterschnitten des Gehäuses lösen können.

Beim Beaufschlagen des Betätigungselementes des Schalters soll die Kappe nicht beschädigt werden. Daher ist zweckmäßigerweise das Gehäuse mit mindestens an den Innenseiten Radien aufweisenden Oberkanten versehen. Die Radien ermöglichen ein Gleiten der Kappe und verhindern deren Überbeanspruchung.

Um die Schaltbewegung direkt zu übertragen darf zwischen der Kappe und dem Betätigungselement des Schalters kein Hohlraum vorhanden sein. Daher ist nach einer Weiterbildung der Erfindung zumindest die Innenseite der elastischen Kappe im Bereich eines Betätigungselementes des Schalters dessen Kontur nachgebildet. Die angeglichenen Konturen der Kappe und des Betätigungselementes vermeiden einen Leerweg der Kappe bei der Beaufschlagung des Betätigungselementes, durch den anfangs ein schwammiges Schaltgefühl entstehen würde, bis die Kappe zur Anlage an dem Betätigungselement käme.

Um das Schalten leichtgängig zu gestalten, ist die Kappe auf ihrer Unterseite mit einer das Betätigungselement des Schalters umlaufenden Vertiefung versehen. Diese Vertiefung ermöglicht ein leichtgängiges Schalten, da der Verformungswiderstand in diesem Bereich geringer als in den anderen Bereichen der Kappe ist. Im weiteren ist die erforderliche Rückstellkraft der Schaltmechanik und damit der Verschleiß des Schalters geringer.

Damit mehrere Schaltfunktionen bereitgestellt werden können, ist zweckmäßigerweise das Gehäuse des Schalters in mindestens zwei mit Betätigungselementen versehene Schaltzonen unterteilt, die durch Stegradien aufweisende Zonenstege, an denen die Kappe anliegt, getrennt sind. Durch die Zonenstege ist das Schalten einer Schaltfunktion sicher durchführbar, ohne daß eine benachbarte Schaltfunktion unbewußt mitgeschaltet wird. Weiterhin verhindern die Zonenstege ein Einfallen der Kappe in den Bereich zwischen den Schaltzonen. Die an den Zonenstegen vorhandenen Stegradien erleichtern das Schalten und verhindern eine Beschädigung der elastischen Kappe aufgrund scharfer Kanten.

Um die Form des Schalters noch sicherer zu gestalten, ist ferner bevorzugt vorgesehen, daß die Kontur der Betätigungselemente einen tangentialen Übergang zu der Oberseite des Zonensteges aufweist. Sonach wird die Kappe selbst bei relativ großen Temperaturschwankungen die gewünschte Form beibehalten.

Bevorzugt ist die Kappe aus einem lichtdurchlässigen Material hergestellt und das Betätigungselement als Lichtleiter, der mit einer Lichtquelle des Schalters zusammenwirkt, ausgebildet. Eine hinter der Kappe angeordnete Suchbeleuchtung oder Funktionsbeleuchtung ist sonach erkennbar. Des weiteren ist durch die Ausgestaltung des Betätigungselementes als Lichtleiter eine gleichmäßige, auf die Schaltzone zu begrenzte Lichtverteilung möglich.

Zweckmäßigerweise umfaßt die Kappe im Bereich des bzw. der Betätigungselemente des Schalters und/oder des Anzeigeelementes optisch und/oder taktil erfassbare Symbole. Sonach ist die Zuordnung von unterschiedlichen Funktionen gewährleistet.

Bei einer vorteilhaften Ausgestaltung der Erfindung bestehen das Symbol und die Kappe aus mindestens zwei unterschiedlichen Materialien. Beispielsweise ist die Kappe aus einem transparenten Material gefertigt, das in einem ersten Arbeitsgang in einer Farbe des Symbols lackiert wird und in einem zweiten Arbeitsgang die Farbe der endgültigen Oberfläche der Kappe erhält. Um die Farbe des Symbols freizulegen, wird die Farbe der Oberfläche mit einem Laser derart entfernt, daß das Symbol konturgenau abgebildet wird. Somit erlaubt die Verwendung der unterschiedlichen Materialien eine optische Unterscheidung von Kappe und Symbol.

Bevorzugt beaufschlagt das Betätigungselement des Schalters einen gehäusefesten Mikroschalter. Zweckmäßigerweise ist das Betätigungselement durch mindestens einen Anschlag in seinem Hub begrenzt. Der Mikroschalter stellt eine zuverlässig wirkende Schaltmechanik zur Verfügung, deren Überlastung aufgrund eines Überhubes des Betätigungselementes durch den Anschlag geschützt ist. Der mechanische Schutz vor einem Überhub des Betätigungselementes ermöglicht die Verwendung einer kleineren und somit preisgünstigeren Variante des Mikroschalters.

Nach einer Weiterbildung der Erfindung überspannt die Kappe mindestens zwei aneinanderliegende Schalter und/ oder Anzeigeelemente. In einer alternativen Ausgestaltung überspannt die Kappe mindestens zwei zueinander beabstandete Schalter sowie mindestens ein zwischen den Schaltern angeordnetes Anzeigeelement. Somit können mehrere Schalter und/oder Anzeigeelemente zu einer Baueinheit nahezu beliebiger Größe zusammengefaßt werden, ohne daß Trennähte oder Spalte zwischen den Schaltern und/oder den Anzeigeelementen vorhanden sind.

Der Schalter und/oder das Anzeigeelement benötigt einen bestimmten Raum und darf dabei nicht in den Bereich des Airbags hineinreichen. Daher ist der Schalter und/oder das Anzeigeelement im Außenbereich des Pralltopfes und in den Bereichen der Speichen eingesetzt. Um diese Bereiche möglichst komplett auszunutzen, ist die Außenkontur des Gehäuses des Schalters und/oder des Anzeigeelementes der Form des Pralltopfes und/oder der Lenkradspeichen des Lenkrades angepaßt.

Es versteht sich, daß die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im folgenden anhand eines Ausführungsbeispieles unter Bezugnahme auf die zugehörigen Zeichnungen näher erläutert. Es zeigen:
- **Fig.1**: eine Darstellung eines Lenkrades eines Kraftfahrzeuges mit erfindungsgemäßen Schaltern und Anzeigeelementen,
- **Fig.2**: eine vergrößerte Darstellung der Einzelheit II nach Fig. 1,
- **Fig.3**: einen Teilschnitt durch die Darstellung nach Fig. 2 gemäß Linie III-III,
- **Fig.4**: einen Teilschnitt durch die Darstellung nach Fig. 2 gemäß Linie IV-IV.

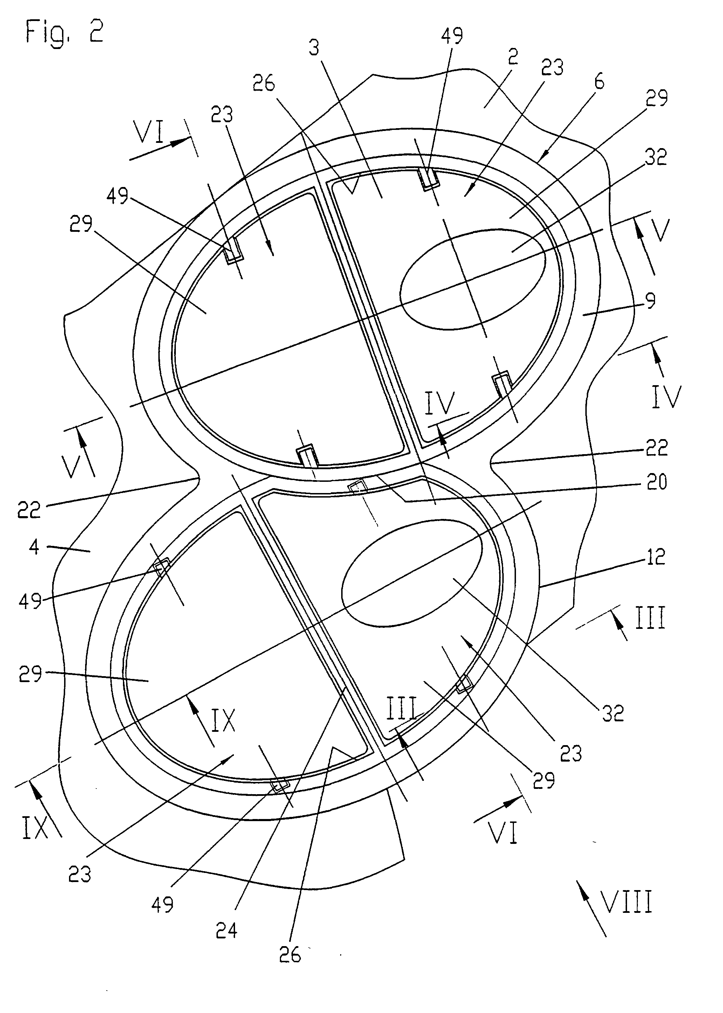

- **Fig.5**: einen Schnitt durch die Darstellung nach Fig. 2 gemäß Linie V-V im unbetätigten Zustand des Schalters,
- **Fig.6**: einen Schnitt durch die Darstellung nach Fig. 2 gemäß Linie VI-VI,
- **Fig.7**: eine Darstellung nach Fig. 5 im betätigten Zustand des Schalters,
- **Fig.8**: eine Darstellung nach Fig. 2 in Richtung des Pfeiles VIII,
- **Fig.9**: einen vergrößerten Teilschnitt durch die Darstellung nach Fig. 2 gemäß Linie IX-IX und
- **Fig.10**: eine vergrößerte Darstellung der Einzelheit X nach Fig. 6.

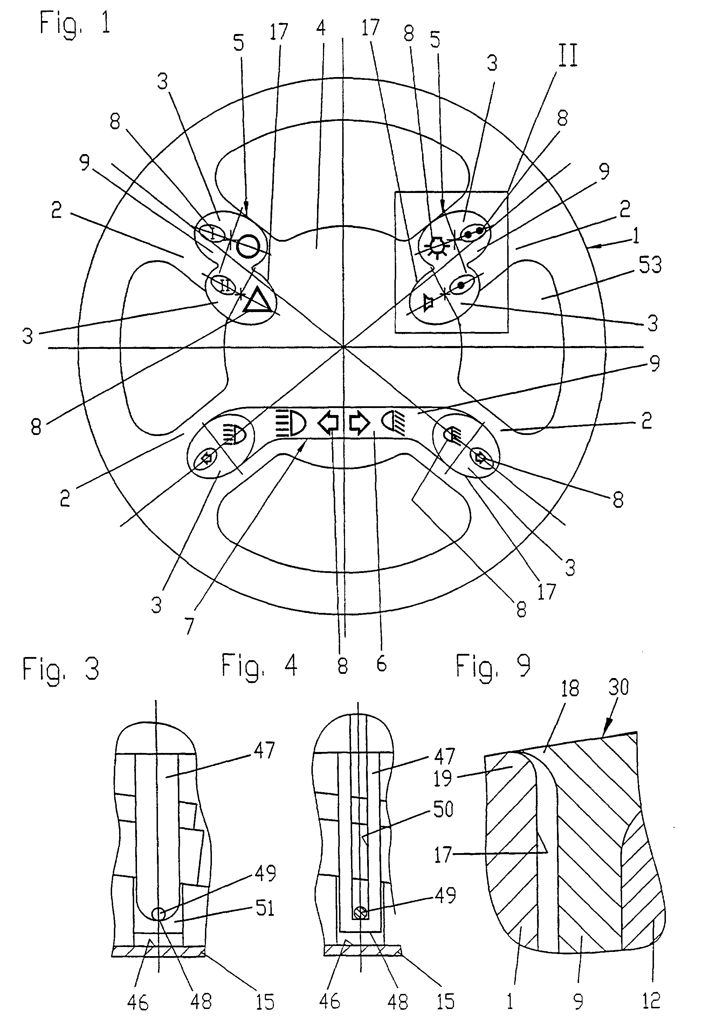

Die Fig. 1 zeigt eine Ansicht auf ein Lenkrad 1 eines Kraftfahrzeuges, das als Vier-Speichen-Lenkrad ausgebildet ist. In die beiden oberen Speichen 2 sind Schalter 3 eingesetzt, die teilweise bis in den Pralltopf 4 des Lenkrades 1 hineinragen. Die Schalter 3 jeder Speiche 2 sind zu einem Schalterpaar 5 zusammengefaßt. In die unteren Speichen 2 ist jeweils ein Schalter 3 eingesetzt, zwischen denen ein Anzeigeelement 6 angeordnet ist. Das Anzeigeelement 6 verläuft über den Pralltopf 4, jedoch außerhalb des Bereiches eines in den Pralltopf 4 eingesetzten Airbags. Die Schalter 3 und das Anzeigeelement 6 bilden eine Funktionseinheit 7. Sowohl die Schalterpaare 5 als auch die Funktionseinheit 7 sind jeweils von einer elastischen Kappe 9 überspannt.

Die Kappe 9 trägt oberhalb des Schalters 3 und des Anzeigeelementes 6 Symbole 8, die auf eine geschaltete bzw. auf eine zu schaltende Funktion hinweisen. Die elastische Kappe 9 weist die gleiche Oberflächenstruktur wie das Lenkrad 1 auf, wonach sich ein gleichmäßiges Erscheinungsbild der Oberfläche ergibt. Die freie Kappenfläche 10 paßt sich jedoch nicht nur optisch in die Struktur des Lenkrades 1 ein, sondern weist auch an ihren Rändern 11 einen kontinuierlichen Übergang zum Lenkrad 1 auf.

Der Aufbau des Schalters 3 und des Anzeigeelementes 6 ist konventionell und umfaßt jeweils ein Gehäuse 12 mit einem Sockel 15. Um die elastische Kappe 9 sicher an dem Schalter 5 und/oder an dem Anzeigeelement 6 zu befestigen, ist jedes Gehäuse 12 mit Hinterschnitten 13 versehen, die umlaufend an den Seitenwänden 14 des Gehäuses 12 angeordnet sind. Von der freien Kappenfläche 10 erstreckt sich in Richtung der Seitenwände 14 des Gehäuses 12 ein umlaufender Rand 11, der in die Hinterschnitte 13 des Gehäuses 12 eingreifende Hintergriffe 16 trägt. Da die Kappe 9 mit ihren Rändern 11 elastisch ist, weiten diese sich beim Aufsetzen auf das Gehäuse 12 auf, nach dem vollständigen Aufschieben der Kappe 9 und dem Entspannen der Ränder 11 legen sich die Hintergriffe 16 in die Hinterschnitte 13 des Gehäuses 12 und die Kappe 9 ist festgelegt.

Im Überdeckungsbereich mit der Kappe 9 sind die Seitenwände 14 des Gehäuses 12 um die Dicke des Randes 11 der Kappe 9 verjüngt, wodurch sich ein Verlauf der Seitenwände 14 und der Ränder 11 auf gleichem Niveau ergibt, was den Einbau des Schalters 3 in eine entsprechende Öffnung 17 des Lenkrades 1 erleichtert.

Bei einer alternativen Befestigung erstreckt sich der umlaufende Rand 11 der Kappe 9 über die gesamte Höhe der Seitenwände 14 des Gehäuses 12 und die Hintergriffe 16 des Randes 11 der Kappe 9 werden zumindest bereichsweise zwischen den Seitenwänden 14 des Gehäuses 12 und einem Sockel 15 eingeklemmt. Aufgrund dieser Befestigungsvariante ergibt sich ebenfalls ein Einbaumaß des Schalters 3 bzw. Anzeigeelementes 6 auf gleichem Niveau, wonach der Einbau in die entsprechende Öffnung 17 des Lenkrades 1 erleichtert ist.

Die Fig. 9 zeigt die Öffnung 17 des Lenkrades 1, in die der Schalter 3 unter Spiel eingesetzt ist. Um dieses Spiel zu überdecken, ist an der elastischen Kappe 9 im Übergangsbereich vom Schalter 3 zum Lenkrad 1 eine Übergangslippe 18 angespritzt, die auf einer Verrundung 19 aufliegt. Die Übergangslippe 18 überdeckt zum einen das Spiel zwischen dem Schalter 3 sowie dem Lenkrad 1 und zum anderen sorgt sie für einen kontinuierlichen Übergang an den Oberflächen.

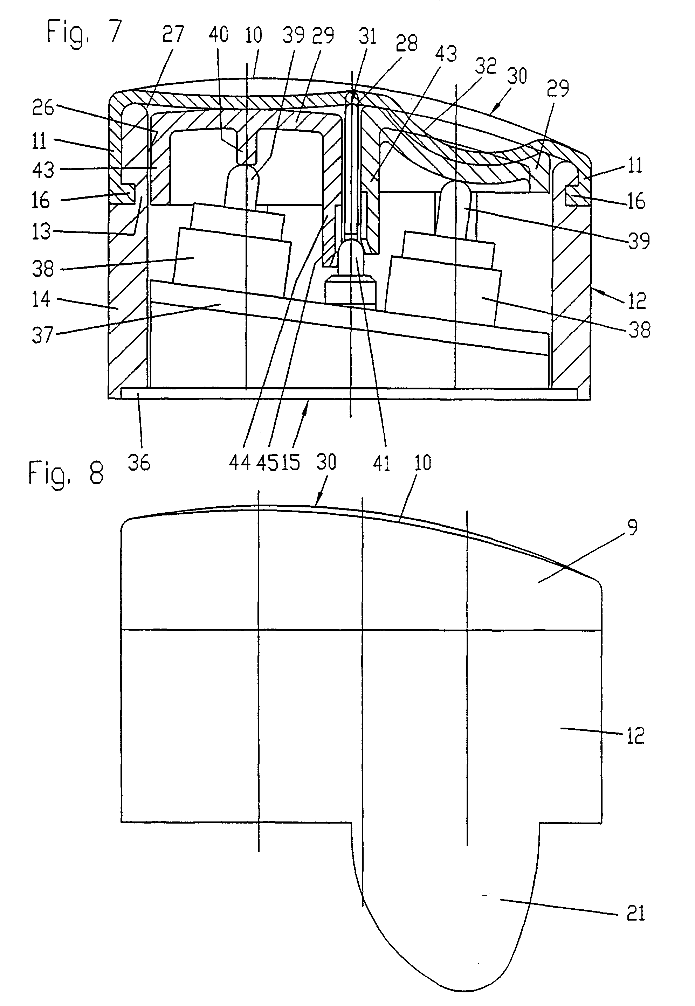

Die Fig. 2 zeigt ein aus zwei Schaltern 3 zusammengestelltes Schalterpaar 6. Der obere Schalter 3 ist komplett von der Speiche 2 aufgenommen und weist eine elliptische Außenkontur auf. Der untere Schalter 3 befindet sich teilweise innerhalb der Speiche 2 und teilweise innerhalb des Pralltopfes 4. Dieser Schalter 3 ist mit einem elliptischen Ausschnitt 20 versehen, der zur teilweisen Aufnahme des oberen Schalters 3 dient. Der Ausschnitt 20 ermöglicht ein näheres aneinanderliegen der beiden Schalter 3. Der untere Schalter 3 ragt mit seinem Gehäuse 12 bereichsweise in einen Freiraum 53 des Lenkrades 1 und ist, wie in Fig. 8 erkennbar, zur Überdeckung dieses Freiraumes 53 mit einer gehäuseseitigen Nase 21 versehen, die an die Kontur des Pralltopfes 4 und der Speiche 2 angepaßt ist.

Das Schalterpaar 5 umfaßt eine die beiden elliptischen Schalter 3 überdeckende Kappe 9, die aus einem lichtdurchlässigen Material gefertigt ist, weshalb die Konturen der Schalter 3 in Fig. 2 als sichtbare Kanten dargestellt sind. Zur Vermeidung von Kerbwirkungen, sind an den Ellipsenübergängen Radien 22 angeformt.

Jeder der Schalter 3 ist in zwei, durch einen Zonensteg 24 getrennte Schaltzonen 23 aufgeteilt. Im oberen Schalter 3 sind die Schaltzonen 23 gleich groß, im unteren Schalter 3 ist eine der Schaltzonen durch den elliptischen Ausschnitt 20 verkleinert. Die Höhe des Zonensteges 24 ist so bemessen, daß die elastische Kappe 9 mit ihrer Innenseite auf dem Zonensteg 24 aufliegt. Die Zonenstege 24 enden an den Seitenwänden 14 des Gehäuses 12 höhengleich mit dessen Oberkanten 25. Auf den Oberkanten 25 des Gehäuses sind an den Innenseiten 26 Radien 27 angebracht. Auch die Zonenstege 24 weisen Stegradien 28 in Richtung jeder Schaltzone 23 auf, so daß beim Betätigen der Kappe 9 diese nirgends mit einer scharfen Kante in Berührung kommt.

In jeder Schaltzone 24 des Schalters 3 ist ein Betätigungselement 29 angeordnet, das mit Spiel zwischen den Innenseiten 26 und dem Zonensteg 24 längsverschieblich gehaltert ist. Die Bedienseite 30 des Betätigungselementes 29 ist, bis auf die Griffmulden 32, an die Kontur des Lenkrades 1 bzw. des Pralltopfes 4 angeglichen, d.h. bei einer Fortführung der Fläche der Bedienseite 30 würde diese einen tangentialen Übergang sowohl zu der Oberseite 31 der Zonenstege 24 als auch zu den Oberkanten 25 des Gehäuses 12 aufweisen. Der komplette Schalter 3 bzw. das Schalterpaar 5 und/oder die Funktionseinheit 7 sind um die Dicke der Kappe 9 zurückversetzt im Lenkrad 1 bzw. Pralltopf 4 angeordnet, wonach durch das Aufsetzen der Kappe 9 auf den Schalter 3 bzw. das Schalterpaar 5 und/oder die Funktionseinheit 7 ein niveaugleicher Übergang vorhanden ist. Die Innenseite der elastischen Kappe 9 ist an die Kontur der Bedienseite 30 des federbelasteten Betätigungselementes 29 angepaßt. Im Umfangsbereich des Betätigungselementes 29 ist in die Innenseite der Kappe 9 eine umlaufende Vertiefung 31 eingelassen. Die Vertiefung 31 ist nicht sichtbar und erlaubt ein leichteres Beaufschlagen des Betätigungselementes 29.

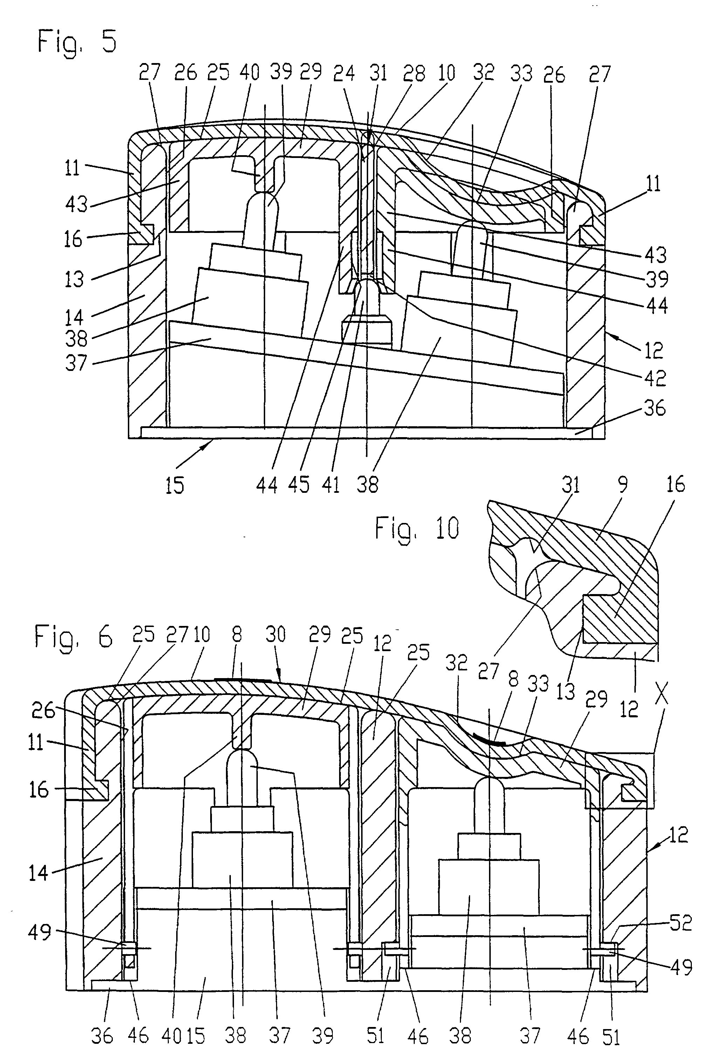

In die Kappe 9 ist eine Griffmulde 32 für das Betätigungselement 29 des Schalters 3 eingelassen, die ein Ertasten des Betätigungselementes 29 ermöglicht. Da sich diese Griffmulde 32 stets nur auf einer Seite des Schalters 3 befindet, ist eine einwandfreie Zuordnung der Schaltfunktion des Schalters 3 gewährleistet. Das Betätigungselement 29 des Schalters 3 weist eine zur Griffmulde 32 der Kappe 9 korrespondierende Bedienmulde 33 auf, die an der Innenseite der Griffmulde 32 anliegt. Im weiteren umfaßt die elastische Kappe 9 oberhalb jedes Betätigungselementes 29 ein Symbol 8, das zur taktilen Erkennung leicht erhaben und zur besseren optischen Erkennung mit-einer Farbe belegt ist (nur in Fig. 6 dargestellt). Zur Einarbeitung des Symbols 8 wird die Kappe 9 zweimal lackiert und die letzte Lackschicht mittels eines Laserverfahrens derart entfernt, daß die erste Lackschicht erhalten bleibt und das Symbol 8 in dieser Farbe konturgenau abgebildet wird. Selbstverständlich ist es auch möglich das Symbol 8 und die Kappe 9 in einem Zwei-Komponenten-Spritzguß-verfahren unter Verwendung von zwei unterschiedlichen Materialien herzustellen.

Dem Gehäuse 12 des Schalters 3 ist ein Sockel 15 zugeordnet, von dem nicht dargestellte Anschlußkontakte zur Bordelektrik des Fahrzeuges führen. Der Sockel 15 sitzt mit seinen Anschlägen 36 in den Seitenwänden 14 des Gehäuses 12 und ist mittels Schrauben an dem Gehäuse 12 festgelegt. Eine in etwa parallel zur Kappe 9 verlaufende Leiterplatte 37 ragt in das Gehäuse 12. Die Leiterplatte 37 trägt in jeder Schaltzone 23 einen Mikroschalter 38, dessen Druckstößel 39 in Richtung der Bedienseite 30 des Betätigungselementes 29 weist. Auf der Innenseite des Betätigungselementes 29 ohne Bedienmulde 33 ist ein Stößel 40 angeformt, der mit dem Druckstößel 39 des Mikroschalters 38 zusammenwirkt. Das Betätigungselement 29 mit der Bedienmulde 33 wirkt direkt auf den Druckstößel 39 des Mikroschalters 38.

Im weiteren ist der Leiterplatte 37 bzw. dem Mikroschalter 38 eine als Leuchtdiode ausgebildete Lichtquelle 41 zugeordnet, wobei der Zonensteg 24 des Gehäuses 12 mit einer Freimachung 42 für die Lichtquelle 41 versehen ist. Von den umlaufenden Führungsrändern 43 des als Lichtleiter ausgelegten Betätigungselementes 29 geht ein Leuchtstab 44 ab, der im Bereich der Lichtquelle 41 endet. Im endseitigen Bereich des Leuchtstabes 44 befinden sich Lichtaufnahmeflächen 45, die in der betätigten Schaltstellung des Betätigungselementes 29 eine größere Überdeckung des Leuchtstabes 44 mit der Lichtquelle 41 erlauben. Dadurch wird in dieser Stellung mehr Licht aufgenommen und an die Bedienseite 30 geleitet, wonach die Schaltstellung erkennbar ist.

Der Mikroschalter 38 wird von dem zugeordneten Betätigungselement 29 beaufschlagt, wobei ein Überhub des Betätigungselementes 29 und die damit verbundene Überlastung des Mikroschalters 38 durch Anschläge 46 des Sockels 15, die mit Laschen 47 bzw. deren Laschenenden 48 des Betätigungselementes 29 zusammenwirken, verhindert ist. Bei der Beaufschlagung des Betätigungselementes 29 kommt das Laschenende 48 an dem Anschlag 46 zur Anlage und begrenzt den Hub des Betätigungselementes 29 nach unten. Der Hub nach oben wird durch Laschenzapfen 49 begrenzt. Bei dem linken Ausführungsbeispiel gemäß Fig. 6 ist der Laschenzapfen 49 am Gehäuse 12 angeformt und wirkt mit einem Langloch 50 der Lasche 47 des Betätigungselementes 29 zusammen (siehe auch Fig. 4).

In dem rechten Ausführungsbeispiel gemäß Fig. 6 ist der Laschenzapfen 49 an der Lasche 47 angeformt. In das Gehäuse 12 ist eine Nut 51 eingearbeitet, wobei der Hub des Betätigungselementes 29 durch die Anlage des Laschenzapfens 49 an einem Nutanschlag 52 der Nut 51 begrenzt ist (siehe auch Fig. 3). In beiden Ausführungen sind für jedes Betätigungselement 29 zwei gegenüberliegende Laschen 47 vorgesehen.

In der Fig. 7 ist das linke Betätigungselement 29 beaufschlagt. Der Stößel 40 wirkt auf den federbelasteten Druckstößel 39 des Mikroschalters 38 und schiebt diesen in das Innere des Mikroschalters 38. Ein Schaltkontakt des Mikroschalters 38 wird daraufhin betätigt und dessen Signal über die Anschlußleitungen weitergeleitet. Gleichzeitig wird der Leuchtstab 44 mit der Lichtaufnahmefläche 45 in Richtung der Lichtquelle 41 geschoben. Hierdurch ergibt sich eine größere Überdeckung, die einen größeren Lichteintritt in das Betätigungselement 29 bewirkt. Nach dem Loslassen des Betätigungselementes 29 verschiebt der Druckstößel 39 unter der Wirkung einer Schalterfeder des Mikroschalters 38 das Betätigungselement 29 nach oben, bis die Laschenzapfen 49 des Gehäuses 12 am Ende des Langloches 50 des Betätigungselementes 29 zur Anlage kommen.

In der Ausführung nach Fig. 2 überspannt die Kappe 9 zwei aneinanderliegende Schalter 3, die das Schalterpaar 5 bilden. Die Fig. 1 zeigt eine Funktionseinheit 7, die von einer entsprechend geformten Kappe 9 abgedeckt wird. Nach einem nicht dargestellten Ausführungsbeispiel überspannt die Kappe 9 den gesamten Pralltopf 4 einschließlich der Schalter 3 und der Funktionseinheit 7. Selbstverständlich weist in diesem Fall die Kappe 9 entsprechende Sollbruchstellen für einen Airbag auf.

## Patentansprüche

1. Schalter (3) und/oder Anzeigeelement (6), der bzw. das in ein Lenkrad (1) eines Kraftfahrzeuges eingebaut und dessen in Richtung der Bedienseite (30) weisende Oberfläche mit einer elastischen Kappe (9) überdeckt ist, **dadurch gekennzeichnet, dass** zur Festlegung der Kappe (9) an einem Gehäuse (12) des Schalters (3) und/oder des Anzeigeelementes (5) Hinterschnitte (13) angebracht sind, in die korrespondierende Hintergriffe (16) der Kappe (9) eingreifen, wobei die Hinterschnitte (13) in Seitenwände (14) des Gehäuses (12) eingelassen sind, und die Kappe (9) mit einem sich an die Seitenwände (14) anlegenden elastischen Rand (11) versehen ist, an den die Hintergriffe (16) angeformt sind.

2. Schalter und/oder Anzeigeelement nach Anspruch 1, **dadurch gekennzeichnet, daß** die Kappenfläche (10) der Kappe (9) an die Oberflächenstruktur des Lenkrades (1) angepaßt ist und an ihren Rändern (11) einen kontinuierlichen Übergang zum Lenkrad (1) aufweist.

3. Schalter und/oder Anzeigeelement nach Anspruch 2, **dadurch gekennzeichnet, daß** die Ränder (11) der Kappenfläche (10) mit einer einen Übergangsbereich zwischen dem Schalter (3) und/oder dem Anzeigeelement (6) sowie dem Lenkrad (1) überdeckenden, umlaufenden Übergangslippe (18) versehen sind.

4. Schalter und/oder Anzeigeelement nach Anspruch 1, **dadurch gekennzeichnet, daß** die Seitenwände (14) des Gehäuses (12) im Überdeckungsbereich mit dem Rand (11) der Kappe (9) um die Dicke des Randes (11) verjüngt sind.

5. Schalter und/oder Anzeigeelement nach einem der Ansprüche 1 bis 4, **dadurch gekennzeichnet, daß** das Gehäuse (12) mit mindestens an den Innenseiten (26) Radien (27) aufweisenden Oberkanten (25) versehen ist.

6. Schalter und/oder Anzeigeelement nach einem der Ansprüche 1 bis 5, **dadurch gekennzeichnet, daß** zumindest die Innenseite der elastischen Kappe (9) im Bereich eines Betätigungselementes (29) des Schalters (3) dessen Kontur nachgebildet ist.

7. Schalter und/oder Anzeigeelement nach einem der Ansprüche 1 bis 6, **dadurch gekennzeichnet, daß** die Kappe (9) auf ihrer Unterseite mit einer das Betätigungselement (29) des Schalters (3) umlaufenden Vertiefung (31) versehen ist.

8. Schalter und/oder Anzeigeelement nach einem der Ansprüche 1 bis 7, **dadurch gekennzeichnet, daß** das Gehäuse (12) des Schalters (3) in mindestens zwei mit Betätigungselementen (29) versehene Schaltzonen (23) unterteilt ist, die durch Stegradien (28) aufweisende Zonenstege (24), an denen die Kappe (9) anliegt, getrennt sind.

9. Schalter und/oder Anzeigeelement nach Anspruch 8, **dadurch gekennzeichnet, daß** die Kontur der Betätigungselemente (29) einen tangentialen Übergang zu der Oberseite des Zonensteges (24) aufweist.

10. Schalter und/oder Anzeigeelement nach einem der Ansprüche 1 bis 9, **dadurch gekennzeichnet, daß** die Kappe (9) aus einem lichtdurchlässigen Material hergestellt und das Betätigungselement (29) als Lichtleiter, der mit einer Lichtquelle (41) des Schalters (3) zusammenwirkt, ausgebildet ist.

11. Schalter und/oder Anzeigeelement nach einem der Ansprüche 1 bis 10, **dadurch gekennzeichnet, daß** die Kappe (9) im Bereich des bzw. der Betätigungselemente (29) des Schalters (3) und/oder des Anzeigeelementes (5) optisch und/oder taktil erfassbare Symbole (8) umfaßt.

12. Schalter und/oder Anzeigeelement nach Anspruch 11, **dadurch gekennzeichnet, daß** das Symbol (8) und die Kappe (9) aus mindestens zwei unterschiedlichen Materialien bestehen.

13. Schalter und/oder Anzeigeelement nach einem der Ansprüche 6 bis 12, **dadurch gekennzeichnet, daß** das Betätigungselement (29) des Schalters (3) einen gehäusefesten Mikroschalter (38) beaufschlagt.

14. Schalter und/oder Anzeigeelement nach Anspruch 13, **dadurch gekennzeichnet, daß** das Betätigungselement (29) durch mindestens einen Anschlag (46) in seinem Hub begrenzt ist.

15. Schalter und/oder Anzeigeelement nach einem der Ansprüche 1 bis 14, **dadurch gekennzeichnet, daß** die Kappe (9) mindestens zwei aneinanderliegende Schalter (3) und/oder Anzeigeelemente (6) überspannt.

16. Schalter und/oder Anzeigeelement nach einem der Ansprüche 1 bis 14, **dadurch gekennzeichnet, daß** die Kappe (9) mindestens zwei zueinander beabstandete Schalter (3) sowie mindestens ein zwischen den Schaltern (3) angeordnetes Anzeigeelement (6) überspannt.

17. Schalter und/oder Anzeigeelement nach einem der Ansprüche 1 bis 16, **dadurch gekennzeichnet , daß** die Außenkontur des Gehäuses (12) des Schalters (3) und/oder des Anzeigeelementes (6) der Form des Pralltopfes (4) und/oder der Speichen (2) des Lenkrades (1) angepaßt ist.

## Claims

1. Switch (3) and/or display element (6), which is incorporated in a steering wheel (1) of an automotive vehicle, and the surface of which, extending in the direction of the operating side (30), is covered with a resilient cap (9), **characterised in that**, for the securement of the cap (9), undercut portions (13) are provided on a housing (12) of the switch (3) and/or of the display element (6), corresponding engaging means (16) of the cap (9) engaging in said portions, the undercut portions (13) being provided in lateral walls (14) of the housing (12), and the cap (9) being provided with a resilient edge (11), which fits onto the lateral walls (14) and is formed integrally with the engaging means (16).

2. Switch and/or display element according to claim 1, **characterised in that** the cap face (10) of the cap (9) is adapted to the surface structure of the steering wheel (1) and has, at its edges (11), a continuous transition to the steering wheel (1).

3. Switch and/or display element according to claim 2, **characterised in that** the edges (11) of the cap face (10) are provided with a circumferential transitional lip (18) which covers a transitional region between the switch (3) and/or the display element (6) and the steering wheel (1).

4. Switch and/or display element according to claim 1, **characterised in that** the lateral walls (14) of the housing (12) reduce in thickness in the overlap region with the edge (11) of the cap (9) by an amount corresponding to the thickness of the edge (11).

5. Switch and/or display element according to one of claims 1 to 4, **characterised in that** the housing (12) is provided with upper edges (25), which have radii (27) at least on the inner surfaces (26).

6. Switch and/or display element according to one of claims 1 to 5, **characterised in that** at least the inside of the resilient cap (9) imitates the configuration of the switch (3) in the region of an actuating member (29) of said switch.

7. Switch and/or display element according to one of claims 1 to 6, **characterised in that** the cap (9) is provided, on its underside, with an indentation (31) which surrounds the actuating member (29) of the switch (3).

8. Switch and/or display element according to one of claims 1 to 7, **characterised in that** the housing (12) of the switch (3) is divided into at least two switching zones (23), which are provided with actuating members (29) and are separated by zone webs (24), which have web radii (28) and abut against the cap (9).

9. Switch and/or display element according to claim 8, **characterised in that** the configuration of the actuating members (29) has a tangential transition to the upper side of the zone web (24).

10. Switch and/or display element according to one of claims 1 to 9, **characterised in that** the cap (9) is produced from a light-permeable material, and the actuating member (29) is in the form of a photoconductor which co-operates with a light source (41) of the switch (3).

11. Switch and/or display element according to one of claims 1 to 10, **characterised in that**, in the region of the actuating member or members (29) of the switch (3) and/or of the display element (6), the cap (9) includes visually and/or tactilely determinable symbols (8).

12. Switch and/or display element according to claim 11, **characterised in that** the symbol (8) and the cap (9) are formed from at least two different materials.

13. Switch and/or display element according to one of claims 6 to 12, **characterised in that** the actuating member (29) of the switch (3) acts on a microswitch (38) secured to the housing.

14. Switch and/or display element according to claim 13, **characterised in that** the actuating member (29) is limited in respect of its movement by at least one stop member (46).

15. Switch and/or display element according to one of claims 1 to 14, **characterised in that** the cap (9) extends over at least two switches (3) and/or display elements (6) which lie adjacent to each other.

16. Switch and/or display element according to one of claims 1 to 14, **characterised in that** the cap (9) extends over at least two spaced-apart switches (3) and at least one display element (6) disposed between the switches (3).

17. Switch and/or display element according to one of claims 1 to 16, **characterised in that** the external configuration of the housing (12) of the switch (3) and/or of the display element (6) is adapted to the shape of the cup-like deflector (4) and/or the spokes (2) of the steering wheel (1).

## Revendications

1. Commutateur (3) et/ou élément indicateur (6) qui est monté dans un volant (1) d'un véhicule automobile et dont la surface, dirigée vers le côté de commande (30), est recouverte d'un capuchon élastique (9), **caractérisé en ce que** pour fixer le capuchon (9) sur un boîtier (12) du commutateur et/ou de l'élément indicateur (5) sont pratiqués des décrochements (13) dans lesquels s'engagent des pattes correspondantes (16) du capuchon (9), les décrochements (13) étant pratiqués dans des parois latérales (14) du boîtier (12), et le capuchon (9) étant pourvu d'un bord élastique (11) s'appliquant contre les parois latérales (14) et sur lequel les pattes (16) sont venues de moulage.

2. Commutateur et/ou élément indicateur selon la revendication 1, **caractérisé en ce que** la surface de capuchon (10) du capuchon (9) est adaptée à la structure superficielle du volant (1) et présente sur ses bords (11), une transition continue avec le volant (1).

3. Commutateur et/ou élément indicateur selon la revendication 2, **caractérisé en ce que** les bords (11) de la surface de capuchon (10) sont pourvus d'une lèvre de transition (18) périphérique, recouvrant une zone de transition entre le commutateur (3) et/ou l'élément indicateur (6) ainsi que le volant (1).

4. Commutateur et/ou élément indicateur selon la revendication 1, **caractérisé en ce que** les parois latérales (14) du boîtier (12) sont rétrécies, dans la zone de recouvrement avec le bord (11) du capuchon (9), de l'épaisseur du bord (11).

5. Commutateur et/ou élément indicateur selon l'une des revendications 1 à 4, **caractérisé en ce que** le boîtier (12) est pourvu d'arêtes supérieures (25) présentant des arrondis (27) au moins sur les côtés intérieurs (26).

6. Commutateur et/ou élément indicateur selon l'une des revendications 1 à 5, **caractérisé en ce qu'**au moins le côté intérieur du capuchon élastique (9) suit le contour du commutateur (3), au moins dans la zone d'un élément d'actionnement (29) de celui-ci.

7. Commutateur et/ou élément indicateur selon l'une des revendications 1 à 6, **caractérisé en ce que** le capuchon (9) est pourvu sur sa face inférieure d'un renfoncement (31) entourant l'élément d'actionnement (29) du commutateur (3).

8. Commutateur et/ou élément indicateur selon l'une des revendications 1 à 7, **caractérisé en ce que** le boîtier (12) du commutateur (3) est divisé en au moins deux zones de commutation (23) pourvues d'éléments d'actionnement (29), lesquelles zones sont séparées par des cloisons de zone (24) présentant des arrondis de cloison (28), contre lesquelles s'applique le capuchon (9).

9. Commutateur et/ou élément indicateur selon la revendication 8, **caractérisé en ce que** le contour des éléments d'actionnement (29) présente une transition tangentielle avec le côté supérieur de la cloison de zone (24).

10. Commutateur et/ou élément indicateur selon l'une des revendications 1 à 9, **caractérisé en ce que** le capuchon (9) est fabriqué dans un matériau translucide et l'élément d'actionnement (29) est réalisé en tant que guide optique qui coopère avec une source de lumière (41) du commutateur (3).

11. Commutateur et/ou élément indicateur selon l'une des revendications 1 à 10, **caractérisé en ce que** dans la zone du ou des éléments d'actionnement (29) du commutateur (3) et/ou de l'élément indicateur (5), le capuchon (9) comprend des symboles (8) qui peuvent être détectés optiquement et/ou tactilement.

12. Commutateur et/ou élément indicateur selon la revendication 11, **caractérisé en ce que** le symbole (8) et le capuchon (9) sont constitués d'au moins deux matières différentes.

13. Commutateur et/ou élément indicateur selon l'une des revendications 6 à 12, **caractérisé en ce que** l'élément d'actionnement (29) du commutateur (3) agit sur un micro-interrupteur (38) solidaire du boîtier.

14. Commutateur et/ou élément indicateur selon la revendication 13, **caractérisé en ce que** la course de l'élément d'actionnement (29) est limitée par au moins une butée (46).

15. Commutateur et/ou élément indicateur selon l'une des revendications 1 à 14, **caractérisé en ce que** le capuchon (9) recouvre au moins deux commutateurs (3) et/ou éléments indicateurs (6) situés côte à côte.

16. Commutateur et/ou élément indicateur selon l'une des revendications 1 à 14, **caractérisé en ce que** le capuchon (9) recouvre au moins deux commutateurs (3) espacés l'un de l'autre, ainsi qu'au moins un élément indicateur (6) disposé entre les commutateurs (3).

17. Commutateur et/ou élément indicateur selon l'une des revendications 1 à 16, **caractérisé en ce que** le contour extérieur du boîtier (12) du commutateur (3) et/ou de l'élément indicateur (6) est adapté à la forme du pot bombé (4) et/ou des rayons (2) du volant (1).
